# EUROPEAN PATENT APPLICATION

(11) **EP 4 142 256 A1**
(43) Date of publication of application: **01.03.2023**
(21) Application number: 21193624.0
(22) Date of filing: 27.08.2021
(51) Int. Cl.: H04L 67/02, H04L 67/1001

(54) **SYSTEM AND METHOD FOR PROVIDING DUAL ENDPOINT ACCESS CONTROL OF REMOTE CLOUD-STORED RESOURCES**

(71) Applicant: THALES DIS CPL USA, INC., Belcamp, MD 21017 (US)
(72) Inventor: DAS, Tirthankar, 92190 MEUDON (FR); KOO, Kyoungbong, 92190 MEUDON (FR); MIYATA, Leonard, 92190 MEUDON (FR); PAN, Feng, 92190 MEUDON (FR); SANTOS, José R., 92190 MEUDON (FR); SPATAR, Mihai, 92190 MEUDON (FR); SUDARSAN, Sridharan, 92190 MEUDON (FR); WONG, Carlos, 92190 MEUDON (FR)
(74) Representative: Quintero Romero, Manuel

(57) **Abstract**

The present invention provides a system for providing dual endpoint access control of remote cloud-stored resources, comprising:
- at least one end-user entity running at least one application, the at least one application being adapted to perform at least one operation to at least one cloud-stored resource;
- a local host interface configured to control access to the remote cloud-stored resources over a communication network by the at least one end-user entity running the at least one application,
wherein the local host interface comprises a first access policy relating a set of authorized operations with at least one access permission to one or more of the of cloud-stored resources, and
wherein the local host interface is configured to send an individualized access request over the communication network to at least one remote server storing the cloud-stored resources if an authorized user requests to perform at least one authorized operation to at least one authorized cloud-stored resource satisfying the access permission set on the first access policy;

- the at least one remote server storing the cloud-stored resources; and
- a cloud interface associated with the at least one remote server, the cloud interface comprising a second access policy consisting of:
o at least one role policy that permits or denies performing at least one operation to at least one cloud-stored resources, and
o an authenticable user account configured to assume at least one of the roles, wherein the user account is authenticable through the received individualized access request sent by the local host interface.

## Description

### TECHNICAL FIELD

The present invention relates to the technical field of access control to remote cloud-stored resources and, particularly, to a dual endpoint (and simultaneous) access control. In particular, the invention allows externalizing the policy management and access controls of cloud-stored resources or objects.

### BACKGROUND OF THE INVENTION

Cloud computing has transformed the way enterprises, government agencies and small businesses manage their company data. Since cloud servers enable agile, cost-effective methods to run business-critical applications and store information, enterprises are shifting from traditional on-premises data centers to cloud servers for storing and managing their digital assets.

Cloud computing, or simply "cloud", is the on-demand availability of computer system resources, especially data storage and computing power, without a direct active management by the client or end-user.

The increase in the demand of cloud services has resulted in the emerging of different cloud service providers such as Amazon Web Services (AWS), Google Cloud Platform (GCP), Microsoft Azure (Azure), OVHclod, or AlibabaCloud. Each of these service providers provide their own security policy(ies), mechanisms, and configuring process that allow flexibly restricting access to cloud-store assets thus leading to a lack of ability from users.

What is more, although it is offered the possibility to restrict access as needed, the actual responsibility for protecting the confidentiality, integrity, and availability of data in the cloud storage is placed on the user's side. The need to choose among different buckets / particular objects, role policies and other technicalities may result in a cumbersome and very challenging task for the average user leading to mistakes that can leave the access policy of a bucket misconfigured with the potential risk to leakages.

Regular data leaks reported in the news have demonstrated that cloud storage is simple to deploy and use but yet difficult to secure.

Thus, easily configurable cloud service security policies may lead to simple and non-effective functional, organizational or hierarchical barriers (difficulting daily use of cloud-services for lack of permissions to users that eventually need accessing certain resources) while complex ones are still vulnerable for misconfigurations.

In conclusion, there is a need in the cloud-related industry for easing the manner to configure access control policies while further protecting the assets from data leakages.

### SUMMARY OF THE INVENTION

The present invention provides a solution for the aforementioned problems by a system and a method for providing dual endpoint access control of remote cloud-stored resources according to claims 1 and 13, respectively, and a local host interface according to claim 15. In dependent claims, preferred embodiments of the invention are defined.

In a first inventive aspect, the invention provides a system for providing dual endpoint access control of remote cloud-stored resources, comprising:
- at least one end-user entity running at least one application, the at least one application being adapted to perform at least one operation to at least one cloud-stored resource;
- a local host interface configured to control access to the remote cloud-stored resources over a communication network by the at least one end-user entity running the at least one application,
   wherein the local host interface comprises a first access policy relating a set of authorized operations with at least one access permission to one or more of the of cloud-stored resources, and
   wherein the local host interface is configured to send an individualized access request over the communication network to at least one remote server storing the cloud-stored resources if an authorized user requests to perform at least one authorized operation to at least one authorized cloud-stored resource satisfying the access permission set on the first access policy;
- the at least one remote server storing the cloud-stored resources; and
- a cloud interface associated with the at least one remote server, the cloud interface comprising a second access policy consisting of:
   ∘ at least one role policy that permits or denies performing at least one operation to at least one cloud-stored resources, and
   ∘ an authenticable user account configured to assume at least one of the roles, wherein the user account is authenticable through the received individualized access request sent by the local host interface.

That is, the dual endpoint access control re-enforces the access control of remote cloud-stored resource(s) locally. Then, additional mappings of local users, local applications and cloud-stored resources (e.g. individual object specifiers) to the remote cloud access controls, allow enforcing locally the access controls of a remote cloud object. It is to be noted that while AWS defines resources as objects, Microsoft Azure uses "blobs". Throughout this document the terms resources, blobs or objects will be deemed as equivalent terms.

This invention secures remote data on cloud storage by enabling the local (host end) management of the security of cloud-stored resources while managed with the familiarity of local users, applications processes, and objects.

In addition, since this invention allows offloading access policies off the cloud end into the local host end it provides a unified platform for configuring data policies over different cloud service providers.

Current solutions based on intermediate architectures between an organization's on-premises infrastructure and a cloud provider's infrastructure such as cloud access security brokers (so called CASB) cannot perform detailed access control capabilities at the local host end, namely they do not have the ability to secure application operation or processes and target resources.

Apart from this process-context awareness achievable by implementing the localhost interface locally, since this is done within the security perimeter of the CSP's customer, there is no need to send to the outside any eventually failing request with the risk of being intercepted and analyzed if the requesting end-user account had no permissions to access that cloud-stored resource. Hence, the present invention also improves data privacy. Within this invention, an operation or process is a running instance of a computer program launched by a computer user account that performs computations and input output operations such as reading data from disk or writing data to a disk, etc.

According to the invention, the term "user" may be understood as a "user-account" since different persons may use the same "end-user entity" or computer system and hence each one must have associated a user account either on the end-user entity operating system, the application according to the present invention, or both.

The end-user entity, e.g. a computer, runs an application which is adapted to perform at least one process or operation to at least one cloud-stored resource. An example of this application may be either a web-based portal, an open source application, or a specific application to download cloud-store resources in a backup database. While an example of operations may be read, write, remove, list, update and aggregate processes.

As a matter of fact, these operations may be supported for or performable to a single (or a collection of) cloud-stored resources. Throughout this document, a collection of cloud-stored resources will be referred to as a "bucket". Furthermore, a bucket assigned to a specific role in order to restrict access to its content is called as a "guarded bucket".

Thus, a logged in user into the end-user entity operating system (and/or the application) launches a particular operation using his user account through the application.

The system also provides a local host interface, at host side, configured to control access to the remote cloud-stored resources over a communication network by the at least one end-user entity running the at least one application. This local host interface may be embodied as an access control processing engine which intercepts any access request to a cloud bucket. In an preferred embodiment, the local host interface is a secure and hardened (i.e., single-function) Transport Layer Security, TLS, proxy configured to intercept Hypertext Transfer Protocol Secure, HTPPS traffic originating from the end-user entity and at least addressed to the cloud server, or *vice-versa.*

This local host interface further comprises a first access policy relating a set of authorized operations with at least one access permission to one or more of the cloud-stored resources. This first access policy is a set of rules set at user or client side to be followed in order to allow selective access to cloud-stored resources.

Non-exhaustive examples of these access permissions are:
- an end-user entity identifier that references the end-user entity running the at least one application,
- a user session identifier that references a session related group of one or more user identities logged onto the application or the end-user entity and executing at least one application's operation,
- the identity of at least one application's operation being executed on an end-user entity,
- the identity of the at least one cloud-stored resource for which access is requested, and
- a pre-determined time window or date when the access request is received.

In a preferred embodiment, access permissions for operations are not based on an ID (such as a number identifier given out by the end-user entity operating system) but defined by its file path (e.g., location such as /*usr*/*bin*/*myapp*) and, optionally, the signature (e.g., hash value such as the output of sha-256 algorithm) of the application's code. That is because the local host interface may be preferably embodied as a software installed at operating file-system or device layer (e.g., end-user entity layer, virtual machine layer or token layer), so that its operation is transparent to all applications that run above it.

From the intercepted operation request, the local host interface extracts the relevant info such as identity of the local user and/or file path that identifies the application and compares it with the access permissions of the first access policy then allowing or denying access to the single or collective cloud-stored resources.

It is to be noted that, in case of requesting an operation to a single or a collection of resources stored in an un-guarded bucket (i.e., not listed on the first or second accesses policies), access is always allowed by the local host interface. The local host interface just lets the request pass through.

Only when an authorized user requests to perform whitelisted operation to at least one authorized cloud-stored resource thus satisfying the access permission set on the first access policy, the local host interface will send an individualized access request via one or more Application Program Interfaces, APIs, using HTTPS over TLS.

Finally, the local host interface is also capable to encrypt data before sending it to the server side and/or decrypt data received therefrom. In other words, in a preferred embodiment, the local host interface may provide data-at-rest encryption.

On the server side, the system provides a remote server storing the cloud-stored resources further associated to a cloud interface that comprises a second access policy. This second access policy is the one formerly enforced by the cloud service provider at server side and comprises, in turn, at least one role policy and a user account.

The role policy(ies) is/are a set of permissions assigned to particular entities such as users, applications or services to grant access to system resources. Thus, the role policy(ies) of the second access policy permit(s) or deny(ies) performing the requested operation to at least one cloud-stored resources. On the other hand, the second access policy comprises a user account authenticable through the received individualized access request sent by the local host interface.

In a particular embodiment, the application (through the end-user entity) is configured to receive log-in credentials that authenticates a user account of the second access policy together with a selection or indication of the cloud-based resources for which access is requested. The application (or the end-user entity itself) is thus configured to forward said log-in credentials and target resources to the local host interface which is further configured to derive one or more user identifiers to enforce the first access policy.

In a particular embodiment, the individualized access request may be formed according to the specific login credentials received by the application from the user. Alternatively, the user account may be a "generic user-account" not specific to any particular user but to a group of users and, then, the generic user-account is authenticable simply by the particulars of the individualized access request.

When authenticated, the user account assumes at least one of the roles. Accordingly, the individualized access request will send the access key and secret key pair for the user account that has the trusted relationship associated with the role.

In a preferred embodiment, the at least one role policy is a wide open access policy configured to permit performing all of the allowable operations to a single or a collection of cloud-stored resources.

Advantageously, the access controls applied on cloud stores (e.g. AWS S3 buckets) and its management are now fully offloaded onto local hosts. By this embodiment, all access controls to the guarded bucket are now fully determined via security policies based on local host users, application processes, resources, etc. with allowable actions such as reading, writing and listings that are fully mapped to guarded bucket operations.

In this preferred embodiment, the local host interface already comprises (e.g., stores) the credentials to authenticate the user-account (e.g., the generic user account) of the second access policy and the necessary keys to assume the role.

Advantageously, any accidental or intentional dumping of cloud-stored objects in a guarded bucket by an unauthorized local user knowing the authentication credentials of the second access policy is completely prevented.

In addition, even if the user knows the specific credentials to authenticate an end-user account of a second access policy and knows as well the keys to assume the role, if the local host interface already encrypted the cloud-stored credentials of the guarded bucket (i.e., performed data-at-rest encryption), any leakage will result with still encrypted objects since the decryption keys are managed by the local host interface which were circumvented to illegally access this stored information.

In a second inventive aspect, the invention provides a method for providing dual endpoint access control of remote cloud-stored resources, comprising:
- receiving by at least one application running on an end-user entity a request to perform at least one operation to at least one cloud-stored resource;
- sending by the at least one application the operation request, the operation request being intercepted by a local host interface;
- deriving by the local host interface one or more identifiers referencing the context of the operation request;
- enforcing an access control by the local host interface by means of a first access policy relating a set of authorized operations with at least one access permission to one or more of the of cloud-stored resources;
- sending by the local host interface an individualized access request over a communication network to at least one remote server storing the cloud-stored resources if an authorized user requests to perform at least one authorized operation to at least one authorized cloud-stored resource satisfying the access permission set on the first access policy;
- receiving by a cloud interface associated with at least one remote server storing the cloud-stored resources at least one remote server the individualized access request; and
- authenticating a user account of a second access policy with said individualized access request, and
- assuming by the authenticated user account at least one role of at least one role policy that permits or denies performing operations to the cloud-stored resources according to a second access policy.

In a particular embodiment, the method further comprises :
- receiving by the application log-in credentials authenticating a pre-registered user account of the second access policy together with the request to perform the at least one operation to the at least one cloud-stored resource, or
- retrieving by the local host interface the log-in credentials to authenticate a pre-registered user account of the second access policy and/or the keys for the user account to assume the role.

In a third inventive aspect, the invention provides a local host interface for controlling access to remote cloud-stored resources over a communication network by at least one end-user entity running at least one application adapted to perform at least one operation to the at least one cloud-stored resource,
wherein the local host interface comprises a first access policy relating a set of authorized operations with at least one access permission to one or more of the of cloud-stored resources,
wherein the local host interface is configured to intercept an operation request sent by the at least one application; and
wherein the local host interface is configured to send an individualized access request over the communication network to at least one remote server storing the cloud-stored resources if an authorized user requests to perform at least one authorized operation to at least one authorized cloud-stored resource satisfying the access permission set on the first access policy, the individualized access request being configured to authenticate a user account of a second access policy at cloud end.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows an embodiment of a system according to the invention.
- Figure 2: This figure shows a detailed embodiment of the local host end of the system according to the invention.

### DETAILED DESCRIPTION OF THE INVENTION

As it will be appreciated by one skilled in the art, aspects of the present invention may be embodied either as a method or as a system.

Herein below it is considered a case in which the system for providing dual endpoint access control of remote cloud-stored resources is implemented by, at a user or client side, a PC as a standalone end-user entity cooperating with a local host interface, and, at remote server side, a remote server cooperating with a cloud interface. In a further embodiment, the end-user entity cooperating with a local host interface is embodied as a Virtual Machine.

According to another embodiment (not represented), either the end-user entity or the remote server may be implemented by a PC, as a Secure Element (SE) host device that cooperates with a Trusted Executed Environment (or TEE) that is adapted to carry out the functions that are carried out by the end-user entity and that are described infra by adding a secure execution environment in the TEE.

According to another embodiment (not represented), either the end-user entity or the remote server may be implemented by a (mobile) phone as an SE host device that cooperates with a SE chip that is adapted to carry out the functions that are carried out by the end-user entity or the remote server and that are described infra by adding, in this SE chip, a secure data storage and a secure data processing. This SE chip may include an incorporated chip, like e.g., an embedded Universal Integrated Circuit Card (or eUICC) or an integrated Universal Integrated Circuit Card (or iUICC), in a terminal, as an SE host device, or a chip that is communicatively coupled to the terminal, as an SE host device, and included in a smart card (or another medium). In addition, this SE chip may be fixed to or removable from its host device. As removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device.

The invention does not impose any constraint as to a kind of the end-user entity or remote server type.

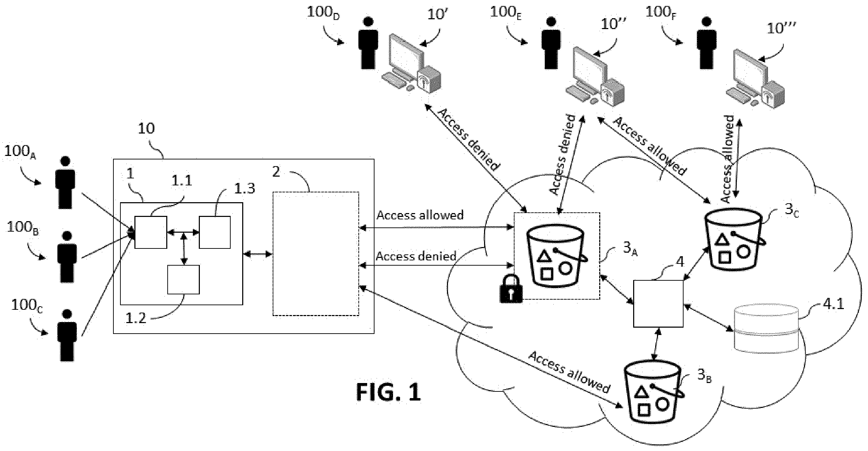

Figure 1 depicts schematically a system for providing dual endpoint access control of remote cloud-stored resources. In its basic configuration, the system comprises one or more PCs 1 as one or more end-user entity(ies), a local host interface 2, at least one remote server storing the cloud-stored resources 3_{A}, 3_{B}, 3_{C}, and a cloud interface 4.

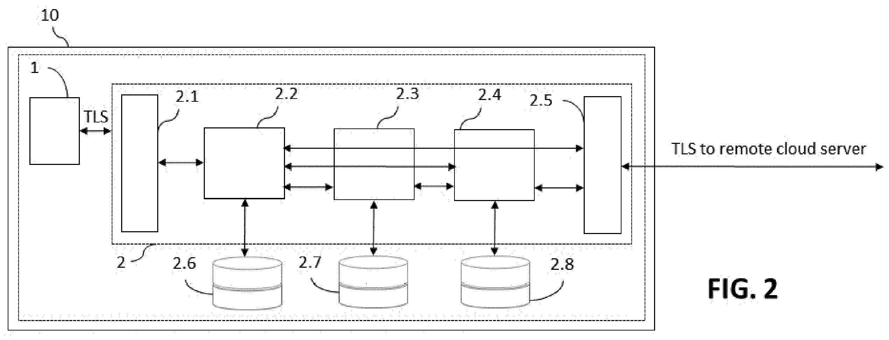

For exemplary purposes, the end-user entity 1 and the local host interface 2 are depicted together within the same execution platform 10. Nevertheless, the rest of execution platforms 10', 10", 10'" are understood as simply comprising the elements described infra for the end-user entity 1, thus without the elements of the local host interface 2 according to figure 2. Therefore, since the local host interface 2 may be any piece of software running into the end-user entity 1 (e.g., a PC), the execution platform 10 is also a PC comprising the software-type local host interface 2. In a particular embodiment, this software-type local host interface 2 is deployed or installed during a setup process that may involve configuring the permissions of the first access policy.

According to the invention, the local host interface 2 is installed within the security perimeter of the end-user entity, i.e., it is deployed at the local end.

The PC 1 is configured to receive, from a user 100 at least his/her login credentials for at least one of his/her end-user account(s), verify them and let said user to run applications and/or initiate different processes as explained below. In addition, the user may introduce through the PC 1 log-in credentials for authenticating a user account of a second access policy of the cloud service provider.

Since the same user 100 may have one or several accounts (i.e., end-user accounts), each with its own credentials, figure 1 depicts different end-user accounts 100_{A} - 100_{F} each associated to a user account either on the end-user entity operating system, the application according to the present invention, or both.

The PC 1 includes one or several (micro)processors (and/or a (micro)controller(s)) 1.1, as data processing means, comprising and/or being connected to one or several memories 1.2, as data storing means, comprising or being connected to means for interfacing with the user 100, such as a Man Machine Interface (or MMI), and comprising or being connected to an Input/Output (or I/O) interface(s) 1.3 that are internally all connected, through an internal bidirectional data bus.

The I/O interface(s) 1.3 may include a wired and/or a wireless interface, to exchange, over a contact and/or Contactless (or CTL) link(s), with the user 100. Within the present description, the adjective "CTL" denotes notably that the communication means communicates via one or several Short Range (or SR) type Radio Frequency (or RF) links.

The SR type RF link(s) may be related to any CTL technology that allows the PC 1 to exchange locally data, through a CTL type link(s), with the user 100. The CTL link(s), when present, may include a BluetooTH (or BTH), a Bluetooth Low Energy (or BLE), a Wi-Fi, a ZigBee, a Near Field Communication (or NFC) type link(s) and/or any other SR type RF communication technology link(s).

Alternatively, instead of a CTL link(s), or additionally, the PC 1 is connected, through a wire(s) or a cable(s) (not represented), to another end-user terminal or device (not represented) also operated by the user 100.

The PC MMI may include a display screen(s), a keyboard(s), a loudspeaker(s) and/or a camera(s) (not represented). The PC MMI allows the user 100 to interact with the PC 1. The PC MMI may be used for getting data entered and/or provided by the user 100, such as user authentication data or login credentials for the PC Operating System, like e.g., a user name, password, PIN and/or user biometric data (like e.g., a fingerprint(s), a facial print(s) and/or an iris print(s)). In addition, the user may introduce through the PC MMI the credentials for the user account of the second access policy.

The PC memory(ies) 1.2 may include one or several volatile memories and/or one or several non-volatile memories. The PC memory(ies) 1.2 may store e.g. a first and/or a last name(s) relating to the user 100, as a user ID(s), an International Mobile Equipment Identity (or IMEI), a Mobile Subscriber Integrated Services Digital Network number (or MSISDN), an Internet Protocol (or IP) address, an International Mobile Subscriber Identity (or I MSI), a Media Access Control (or MAC) address, an email address(es) and/or the like, as an ID(s) relating to each user to be authenticated.

The PC memory(ies) 1.2 may store data, such as an ID(s) relating to the PC, that allows identifying uniquely and addressing the PC. The PC ID(s) may include a unique ID, such as a UUID, a Uniform Resource Locator (or URL), a Uniform Resource ID (or URI), and/or other data that allows identifying uniquely and addressing the PC.

The PC memory(ies) 1.2 stores the Operating System (OS) and an application which is adapted to perform at least one process or operation to at least one cloud-stored resource such as a web-based portal (e.g., Amazon Web Service, AWS, management console), an open source application (e.g., AWS command line interface), or an application to download cloud-store resources in a backup database.

The PC 1 itself, or in combination with the execution platform 10, is further configured to send information over a communication network (e.g., Transport Layer Security, TLS) to the cloud end.

The local host interface 2 is configured to control access to the remote cloud-stored resources by intercepting said information sent by the PC 1 and enforcing a first access policy relating a set of authorized operations with at least one access permission to one or more of the of cloud-stored resources.

If the requested operation is whitelisted, i.e., an authorized user requests to perform at least one authorized operation to at least one authorized cloud-stored resource thus satisfying the access permission set on the first access policy, then the local host interface creates and sends an individualized access request to the the cloud end, namely to the remote server storing the cloud-stored resources.

In addition, the local host interface 2 may receive from the end-user entity 1 (in turn, from the user) the credentials to authenticate the user account of the second access policy. In a preferred example as further explained in connection with figure 2, the local host interface in fact comprises the credentials to authenticate the user account of the second access policy as well as the necessary keys to assume the role. The application may yet ask the user to enter his/her credentials for authenticating the user account of the second access policy which will be compared with the ones stored within the local host interface (and thus verified) before forwarding the operation request to the cloud end by the individualized access request.

In an alternative embodiment, the local host interface only stores the access key and secret key pair for the user account(s) to assume the role. Thus, the user may introduce the credentials for authenticating the second access policy user account which will be used in creating the individualized access request. Therefore, if these credentials were wrongly entered, the second access policy will reject the operation request.

As mentioned, at the cloud end, the system comprises the remote server (not shown) storing a plurality of buckets 3_{A} to 3_{C}, and the cloud interface 4. Each of these buckets 3_{A} to 3_{C} may comprise a single or a collection of cloud-stored resources (e.g., objects) to which supported operations or processes can be performed by the application according to the invention. Bucket 3_{A} is depicted as a "guarded bucket" because it is assigned to a specific role of the local host interface first access policy in order to restrict access to its content. The rest of the bucket 3_{B}, 3c are unguarded buckets.

In a preferred embodiment, the cloud-stored resources are Simple Storage Service, S3, bucket objects, the collection of resources referring to part or all of the bucket objects.

In an embodiment, the cloud interface 4 can be associated to only one or a set of buckets 3_{A} to 3_{C}. The cloud interface may channelize all the requests received at the cloud end to enforce a second access policy. The cloud interface 4 is then in communication with a database 4.1 that stores said second access policy consisting of:
- at least one role policy that permits or denies performing at least one operation to at least one cloud-stored resources, and
- an authenticable user account configured to assume at least one of the roles.

Then, in a preferred embodiment, the role policy is an AWS Identity and Access Management, IAM, role policy with an attached AWS IAM role. Finally, preferably, the user account is an AWS IAM user. Anyway, the skilled person should recognize that, depending on the specific cloud service provider, the role policy and the user account may be named differently.

Therefore, the cloud interface 4 is configured to receive individualized access request(s) sent by the local host interface 2 and allow or deny its access to particular buckets 3_{A} to 3_{C} based on the second access policy rules. Even if the cloud interface 4 is depicted

In use, a user invokes using his PC 1 a particular process or operation such as read, write, remove, list, update, or aggregate to a single or a collection of the cloud-stored resources of the buckets 3_{A} to 3_{C}.

If the user 100_{D}-100_{F} uses an execution platform 10'-10'" that has no local host interface 2 and target bucket 3_{B}, 3_{C} or specific cloud-store resource is not guarded, the bucket operation shall be allowed.

Otherwise, if the target cloud-store resource or bucket 3_{A} is guarded by a first access policy, then an access request sent from any of the execution platforms 10'-10'" shall be denied. This may happen because the local host interface 2 stores the credentials for the user account and/or necessary keys to assume the role of the second access policy. Therefore, if the requested operation is not channelize first through the local host interface, there is no option to retrieve the authentication credentials of the second access policy.

Alternatively, the credentials for the user account and/or necessary keys to assume the role of the second access policy may be entered by the user 100_{D}-100_{F} him/herself through the end-user entity 1. Nevertheless, since data-at-rest encryption is the norm, the retrieved cloud-stored resources from a guarded bucket 3_{A} can not be decrypted unless it passes through the original local host interface 2 storing and managing the keys.

Another use example is when the operation request is sent from the execution platform 10, i.e., when the operation request originally sent by the end-user entity 1 is then trapped by the local host interface where different access checks are to be performed, such as:
- does the user have permission to invoke the operation ?
- is the target cloud-stored resource or bucket guarded ?
- does the user have permission to invoke such operation in such context: date, time window, file path, etc. ?

If yes to all, then access is allowed. Otherwise, the access to the cloud-store resource is denied.

Allowing access to the cloud-stored resource or bucket means that the user can via the process read objects from bucket or write objects to bucket. He/She can also enumerate the bucket objects, create directories or remove directories from the bucket.

In an embodiment, if the user tries to write data to the bucket, the data is first encrypted by the local host interface and then written to the guarded bucket. Contrarily, if the user is trying to read from the bucket, then the data is retrieved, first decrypted by the local host interface and then provided to the user (possibly through the application). Advantageously, at no point in time clear text data is transferred over the wire.

Figure 2 depicts a detailed and isolated view of the execution platform 10 of figure 1, wherein the execution platform 10 is formed by an end-user entity 1 (e.g., a computer or PC) and a local host interface 2.

The end-user entity 1 is configured to send operation requests preferably using HTTPS over a TLS bi-directional communication network. However, the local host interface 2 is a secure and hardened TLS proxy configured to intercept this HTPPS traffic originating from the end-user entity and at least addressed to the cloud server, or *vice-versa.*

Finally, the local host interface 2 may send the individualized access request(s) to the cloud server(s) via one or more Application Program Interfaces, APIs, using HTTPS over TLS. Additionally or alternatively, the individualized access requests may be sent to a corporate HTTPS proxy.

The local host interface 2 comprises a proxy application gateway 2.1 configured to intercept the operation request from the end-user entity 1, a first access policy enforcing module 2.2 configured to enforce the first access policy to the operation request intercepted, an individualized access request creation module 2.3, a crypto module 2.4 for encrypting / decrypting data providing at least the function data-at-rest for the cloud-stored resources, and an external network interface 2.5 configured to send and receive information with the cloud server(s) of one or more cloud service provider(s).

The local host interface 2 further comprises (or can access to) a first database 2.6 with the rules of the first access policy accessible by the first access policy enforcing module 2.2, a second database 2.7 with the authentication credentials of at least one user account of the second access policy and the access key and secret key pair for this(those) user account(s) to assume one or more role(s), and a third database 2.8 storing the key pair for encrypting and decrypting information.

Therefore, in use, the proxy application gateway 2.1 intercepts an operation request sent by the end-user entity 1 running an application such as a web-based portal (e.g., AWS management console), an open source application (e.g., AWS command line interface), or an application to download cloud-store resources in a backup database. This application may be also an internal client application using REST.

Then, the proxy application gateway 2.1 sends this intercepted operation request to the first access policy enforcing module 2.2 which extracts the relevant info and compares it with the access permissions of the first access policy stored within the first database 2.6. In case the operation request is authorized according to the first access policy, then the individualized access request creation module 2.3 shall retrieve the credentials of a user account and/or the keys for that user account to assume a role that can access the guarded bucket where the target cloud-stored resource remains from the second database 2.7.

In an alternative embodiment, the user him/herself enters these credentials of the user account of the second access policy and the individualized access request creation module 2.3 only retrieves the keys for that user account to assume the proper role from the second database 2.7.

As mentioned, advantageously, the role policy is a wide open access policy configured to permit performing all of the allowable operations to a single or a collection of cloud-stored resources.

Finally, depending on whether the requested operation is a write or read operation, the individualized access request is encrypted or decrypted, respectively, using the keys stored in the third database 2.8.

In other words, the local host interface provides data-at-rest encryption, the resources being encrypted by the crypto module 2.4 using a first encryption key stored in the third database 2.8. Then, the resources (e.g., objects) can be stored (i.e., written) in the target guarded cloud bucket.

In a preferred embodiment, when this encrypted cloud-stored resource is to be "read", upon retrieval, the crypto module 2.4 is configured to decrypt it only if the first access policy sets out the decrypt operation for an authorized user associating the exact retrieved resources.

Nevertheless, for operation requests like "listing" (resources from a guarded bucket) that may not contain relevant data, the first access policy may be less restrictive. This is also the case, for instance, of logging/auditing capabilities.

In a further embodiment, the local host data 2 is also configured to create and update a history log detailing successful and attempted accesses to protected data. These logs can be often reported to the user or client informing about unusual or improper data access thus alerting about insider threads, hackers and Advanced Persistent Threads (APT) that might have bypassed the perimeter security.

Finally, the third database 2.8 may also contain the certificates of the cloud service provider(s) in order to allow sending the individualized access request through an unsecured network. Thus, ensuring that data is always encrypted in-flight.

These cloud service provider certificate(s) can be either accessible by the crypto module 2.4 or the external network interface 2.5, or both. Then, the external network interface 2.5 will securely exchange the information with the cloud server(s).

## Claims

1. System for providing dual endpoint access control of remote cloud-stored resources, comprising:
- at least one end-user entity 1 running at least one application, the at least one application being adapted to perform at least one operation to at least one cloud-stored resource;
- a local host interface 2 configured to control access to the remote cloud-stored resources over a communication network by the at least one end-user entity running the at least one application,
wherein the local host interface comprises a first access policy relating a set of authorized operations with at least one access permission to one or more of the of cloud-stored resources, and
wherein the local host interface is configured to send an individualized access request over the communication network to at least one remote server storing the cloud-stored resources if an authorized user requests to perform at least one authorized operation to at least one authorized cloud-stored resource satisfying the access permission set on the first access policy;
- the at least one remote server storing the cloud-stored resources; and
- a cloud interface 4 associated with the at least one remote server, the cloud interface comprising a second access policy consisting of:
∘ at least one role policy that permits or denies performing at least one operation to at least one cloud-stored resources, and
∘ an authenticable user account configured to assume at least one of the roles, wherein the user account is authenticable through the received individualized access request sent by the local host interface.

2. System according to claim 1, wherein the access permission set on the first access policy comprises at least one of the following criteria:
- an end-user entity identifier that references the end-user entity running the at least one application,
- a user session identifier that references a session related group of one or more user identities logged onto the application or the end-user entity and executing at least one application's operation on an end-user entity,
- the identity of at least one application's operation such as its file path being executed on an end-user entity,
- the identity of the at least one cloud-stored resource for which access is requested, and
- a pre-determined time window when the access request is received.

3. System according to any of claims 1 or 2, wherein the local host interface is configured to send the individualized access request via one or more Application Program Interfaces, APIs, using Hypertext Transfer Protocol Secure, HTTPS, over Transport Layer Security, TLS.

4. System according to any of claims 1 to 3, wherein the operation performable by the at least one application to a single or a collection of cloud-stored resources is at least one of the following operations: read, write, remove, list, update, aggregate, and decrypt.

5. System according to any of claims 1 to 4, wherein the local host interface provides data-at-rest encryption, the resources being encrypted by the local host interface using a first encryption key and stored in the remote server.

6. System according to claim 5, wherein the local host interface or the application itself is configured to decrypt the resources retrieved upon the individualized access request only if the first access policy sets out the decrypt operation for said authorized user identifiers associating the retrieved resources.

7. System according to any of claims 1 to 6, wherein the local host interface comprises a log database configured to record the particulars of the individualized access request.

8. System according to any of claims 1 to 7, wherein at least one role policy is a wide open access policy configured to permit performing all of the allowable operations to a single or a collection of cloud-stored resources.

9. System according to any of claims 1 to 8, wherein the application is a web-based portal such as Amazon Web Service, AWS, management console, an open source application such as AWS command line interface, or an application to download cloud-store resources and, optionally, store them in a backup database.

10. System according to any of claims 1 to 9, wherein the application is configured to receive log-in credentials that authenticates a user account of the second access policy together with the cloud-based resources for which access is requested, the application being further configured to send said log-in credentials and resources to the local host interface which is further configured to derive one or more user identifiers to enforce the first access policy.

11. System according to any of claims 1 to 9, wherein the local host interface comprises the credentials to authenticate the user account of the second access policy and/or the keys for the user account to assume the role.

12. System according to any of claims 1 to 11, wherein the cloud-stored resources are Simple Storage Service, S3, bucket objects, the collection of resources referring to part or all of the bucket objects, and wherein the role policy is an AWS Identity and Access Management, IAM, role policy with an attached AWS IAM role, and wherein the user account is an AWS IAM user.

13. Method for providing dual endpoint access control of remote cloud-stored resources, comprising:
- receiving by at least one application running on an end-user entity a request to perform at least one operation to at least one cloud-stored resource,
- sending by the at least one application the operation request, the operation request being intercepted by a local host interface;
- deriving by the local host interface one or more identifiers referencing the context of the access request;
- enforcing an access control by the local host interface by means of a first access policy relating a set of authorized operations with at least one access permission to one or more of the of cloud-stored resources;
- sending by the local host interface an individualized access request over a communication network to at least one remote server storing the cloud-stored resources if an authorized user requests to perform at least one authorized operation to at least one authorized cloud-stored resource satisfying the access permission set on the first access policy;
- receiving by a cloud interface associated with at least one remote server storing the cloud-stored resources the individualized access request; and
- authenticating a user account of a second access policy with said individualized access request, and
- assuming by the authenticated user account at least one role of at least one role policy that permits or denies performing operations to the cloud-stored resources according to a second access policy.

14. Method according to claim 13, wherein the method further comprises :
- receiving by the application log-in credentials authenticating a pre-registered user account of the second access policy together with the request to perform the at least one operation to the at least one cloud-stored resource, or
- retrieving by the local host interface the log-in credentials to authenticate a pre-registered user account of the second access policy and/or the keys for the user account to assume the role.

15. A local host interface for controlling access to remote cloud-stored resources over a communication network by at least one end-user entity running at least one application adapted to perform at least one operation to the at least one cloud-stored resource, wherein the local host interface comprises a first access policy relating a set of authorized operations with at least one access permission to one or more of the of cloud-stored resources,
wherein the local host interface is configured to intercept an operation request sent by the at least one application; and
wherein the local host interface is configured to send an individualized access request over the communication network to at least one remote server storing the cloud-stored resources if an authorized user requests to perform at least one authorized operation to at least one authorized cloud-stored resource satisfying the access permission set on the first access policy, the individualized access request being configured to authenticate a user account of a second access policy at cloud end.
